# EUROPÄISCHE PATENTSCHRIFT

(11) **EP 0 449 773 B1**
(45) Veröffentlichungstag und Bekanntmachung des Hinweises auf die Patenterteilung: **03.05.1995**
(21) Anmeldenummer: 91810176.7
(22) Anmeldetag: 19.03.1991
(51) Int. Cl.: A01N 25/34, B65D 65/38

(54) **Flüssige pestizide Wirkstoffkonzentrate**
Liquid pesticide concentrates
Concentrés pesticides liquides

(30) Priorität: 27.03.1990 CH 1011/90
(43) Veröffentlichungstag der Anmeldung: 02.10.1991
(73) Patentinhaber: Novartis AG, 4058 Basel (CH)
(72) Erfinder: Dez, Guy, F-30310 Vergeze (FR); Lerivrey, Jacques, Dr., Greensboro, NC 27410 (US); Schneider, René, Dr., CH-1723 Marly (CH); Zurkinden, Alexander, CH-4333 Münchwilen (CH); Moore, Carolyn,, Kernersville, NC 27284 (US)

(56) Entgegenhaltungen:
- EP-A- 0 347 220
- GB-A- 922 317
- US-A- 3 695 989
- CHEMICAL PATENTS INDEX, BASIC ABSTRACTS JOURNAL, Woche 8739, 25. November 1987,Sektion C: AGDOC, Zusammenfassung Nr. 87-274684/39, Derwent Publications Ltd,Londen, GB; & JP-A-62 192 301 (KAGAKU E.C. KOGYO K.K.) 220887.

## Beschreibung

Die vorliegende Erfindung betrifft flüssige pestizide Wirkstoffkonzentrate auf nichtwässriger Basis, die in einem aus einer wasserlöslichen Folie bestehenden Beutel eingeschlossen sind.

Pestizide Mittel sind üblicherweise als Konzentrate im Handel, die vor dem Gebrauch mit Wasser zu einer Spritzbrühe verdünnt werden. Bei der Handhabung der Konzentrate sind wegen der Toxizität der Wirkstoffe Massnahmen erforderlich, die verhindern, dass der Anwender mit den Konzentraten in Berührung kommt. Dabei ist der Anwender insbesondere vor dem Einatmen des bei der Handhabung von festen Formulierungen, wie Pulvern und Granulaten, entstehenden Staubs und vor dem Hautkontakt mit flüssigen Formulierungen, wie emulgierbaren Konzentraten, zu schützen. Von den Herstellern von Wirkstoffkonzentraten werden daher eine Reihe von Schutzmassnahmen, wie das Tragen von Atemschutzmasken, Schutzanzügen und Handschuhen, nachdrücklich empfohlen.

Um den Schutz des Anwenders weiter zu verbessern, wurde auch bereits vorgeschlagen, die mit der Handhabung von festen Wirkstoffkonzentraten verbundene Staubbildung und den Hautkontakt mit flüssigen Wirkstoffkonzentraten durch Verpacken dieser Wirkstoffkonzentrate in einem aus einer wasserlöslichen Folie hergestellten Beutel zu vermeiden. Die Herstellung der Spritzbrühe aus solchen in wasserlöslichen Material verpackten Konzentraten erfolgt in der Weise, dass man das Konzentrat samt seiner Verpackung in die zur Herstellung der Spritzbrühe notwendige Menge Wasser einbringt, wo sich die Spritzbrühe nach Auflösung der Verpackung und Verteilung des Inhalts spontan bildet. Auf diese Weise wird der direkte Kontakt des Anwenders mit dem Wirkstoffkonzentrat vermieden. Darüberhinaus bietet die Verpackung von Konzentraten in wasserlöslichen Verpackungsmaterialien den Vorteil, dass die Konzentrate den Behältern, in denen sie zum Schutz vor Feuchtigkeit transportiert und gelagert werden, ohne Zurücklassung von Rückständen, die eine Reinigung der Behälter notwendig machen würde, entnommen werden können. Ferner wird die Dosierung des Wirkstoffs wesentlich erleichtert, da jeder Beutel eine definierte Menge Wirkstoff enthält.

Die bisher bekanntgewordenen wasserlöslichen Verpackungen von flüssigen Wirkstoffkonzentraten weisen jedoch eine relativ hohe Stoss- und Schlagempfindlichkeit auf, sodass die Verpackungen bei plötzlich auftretenden mechanischen Beanspruchungen, beispielsweise beim Herunterfallen der Verpackungen auf den Boden, platzen. Diese nachteiligen Eigenschaften führen nicht nur beim Transport und bei der Handhabung solcher Verpackungen immer wieder zu Verlusten und zur Kontamination der Umgebung und/oder des Anwenders, sondern es gehen dadurch auch die vorgenannten, mit der Verwendung von wasserlöslichen Verpackungsmaterialien verbundenen Vorteile verloren.

Die GB-B-922 317 beschreibt feste oder flüssige und besonders wasserlösliche Pestizide, die zusätzlich ein Benetzungsmittel enthalten können und die in einer wasserlöslichen Folie verpackt sind.

Chem. pat. ind., Basic Abstracts J., Woche 8739,25.11.87, Abstract Nr. 87-274684/39 beschreibt verfestigte und in einer wasserlöslichen Folie eingepackte Gele, die ganz offensichtlich keine Konzentrate darstellen, aus denen erst eine Applikationsform hergestellt werden muss.

Es ist daher die Aufgabe der vorliegenden Erfindung, pestizide Wirkstoffkonzentrate in abgepackter Form bereitzustellen, welche aus einer wasserlöslichen Verpackung und einem flüssigen, nichtwässrigen Pestizidkonzentrat bestehen, die gegenüber Schlag und Stoss eine erhöhte Stabilität aufweisen.

Gemäss vorliegender Erfindung werden pestizide Wirkstoffkonzentrate in abgepackter Form vorgeschlagen, welche aus einer wasserlöslichen Verpackung und einem flüssigen, nichtwässrigen Pestizidkonzentrat bestehen, die dadurch gekennzeichnet sind, dass sie eine oder mehrere wasserunlösliche Aktivsubstanzen, ein gegenüber dem wasserlöslichen Verpackungsmaterial inertes Lösungsmittel, einen viskositätssteigernden Zusatz und ein oder mehrere Dispergiermittel enthalten und die Viskosität des flüssigen Pestizidkonzentrats 1000-20000 cp beträgt.

Die erfindungsgemässen Wirkstoffkonzentrate stellen im einfachsten Falle Lösungen einer oder mehrerer Aktivsubstanzen in einem nichtwässrigen Lösungsmittel dar, deren Viskosität durch einen viskositätssteigernden Zusatz auf 1000-20000 cp gebracht wurde. Die erfindungsgemässen Wirkstoffkonzentrate können jedoch auch Lösungen einer oder mehrerer Aktivsubstanzen in einem nichtwässrigen Lösungsmittel darstellen, in denen zusätzlich eine oder mehrere in dem verwendeten Lösungsmittel unlösliche Aktivsubstanzen suspendiert sind und wobei auch die Viskosität dieser Suspensionen durch Zugabe eines viskositätssteigernden Zusatzes auf 1000-20000 cp gebracht wurde. Schliesslich kann es sich bei den erfindungsgemässen Konzentraten auch um Suspensionen einer oder mehrerer Aktivsubstanzen in einem nichtwässrigen Lösungsmittel handeln, deren Viskosität durch Zugabe eines viskositätssteigernden Zusatzes auf 1000-20000 cp eingestellt wurde.

Neben einer oder mehreren Aktivsubstanzen, dem Lösungsmittel und dem viskositätssteigernden Zusatz enthalten die erfindungsgemässen Konzentrate vorteilhaft ein oder mehrere Dispergiermittel. Der Zusatz eines oder mehrerer Dispergiermittel empfiehlt sich insbesondere dann, wenn die Aktivsubstanz und/oder das verwendete Lösungsmittel und/oder der viskositätssteigernde Zusatz in Wasser unlöslich sind und nach dem Verdünnen des Konzentrats mit Wasser eine Dispersion gebildet werden muss.

Als nichtwässrige Lösungsmittel sind generell in der Formulierung von Pestiziden übliche Lösungsmittel geeignet, die gegenüber dem wasserlöslichen Verpackungsmaterial inert sind, d.h. solche, die das wasserlösliche Verpackungsmaterial weder lösen oder quellen noch sonst negativ beeinflussen. In bezug auf diese Einschränkung ist jedoch zu berücksichtigen, dass Lösungsmittel gegenüber dem Verpackungsmaterial im allgemeinen lösende und quellende Eigenschaften in umso geringerem Masse zeigen, je höher die Konzentration der der darin gelösten Substanzen ist. Geeignete Lösungsmittel sind Alkohole, Alkandiole (Glykole), Diethylenglykolmonoether, Ketone, Ester, aliphatische und aromatische Kohlenwasserstoffe, sowie mineralische und pflanzliche Oele. Als Alkohole kommen insbesondere C₁-C₈-Alkanole, vorzugsweise C₃-C₆-Alkanole und C₅-C₆-Cycloalkanole in Betracht. Geeignete Alkandiole sind insbesondere Ethylenglykol und Propylenglykol und als Diethylenglykolmonoether können insbesondere Diethylenglykolmonomethylether und Dipropylenglykolmonomethylether verwendet werden. Als Ketone sind vor allem C₄-C₈-Alkanone und C₅-C₆-Cycloalkanone geeignet. Als Ester können vorzugsweise C₃-C₆-Alkylacetate und Lactone von C₄-C₅-Hydroxyalkancarbonsäuren verwendet werden. Als geeignete aliphatische und aromatische Kohlenwasserstoffe sind insbesondere Hexan, Cyclohexan, Toluol, Xylol, sowie Gemische von Alkylbenzolen, wie sie beispielsweise unter den Bezeichnungen ®Solvesso und ®Shellsol im Handel sind, geeignet. Als mineralische Oele können insbesondere höhersiedende Erdölfraktionen verwendet werden. Geeignete pflanzliche Oele sind Ricinusöl, Rapsöl, Rapsölester, Baumwollsamenöl und Sojaöl. Als besonders geeignete Lösungsmittel sind Cyclohexanol, Diacetonalkohol, Cyclohexanon, Butyrolacton, Amylacetat, Toluol, Xylol, sowie Gemische von Alkylbenzolen mit einem Siedebereich von 130-170°C zu nennen.

Als viskositätssteigernde Zusätze kommen für die Zwecke der vorliegenden Erfindung vor allem wasserlösliche Polymere und hydrophile Kieselsäure in Betracht. Als geeignete wasserlösliche Polymere sind Cellulosederivate, Proteine (Gelatine) und Polyvinylpyrrolidon mit einem Molgewicht von 600000-1000000 zu nennen. In einzelnen Fällen können auch oberflächenaktive Substanzen, wie z.B. Aethylenoxid-Propylenoxid Blockpolymere oder Salze von Dodecylbenzolsulfonsäure als viskositätssteigernde Zusätze dienen. Bevorzugte viskositätssteigernde Zusätze sind Cellulosederivate, wie Methylcellulose, Ethylcellulose, Hydroxyethylcellulose und Hydroxypropylcellulose.

Als Dispergiermittel können grundsätzlich alle in der Formulierung von Pestiziden üblichen nichtionischen, anionischen und kationischen Dispergiermittel verwendet werden. Vorzugsweise werden nichtionische oder anionische Dispergiermittel oder Gemische von nichtionischen und anionischen Dispergiermitteln verwendet. Als geeignete nichtionische Dispergiermittel sind insbesondere Ethylenoxid-Propylenoxid Blockpolymere, Alkylphenolpolyglykolether, sowie Fettsäure- und Fettalkoholpolyglykolether zu nennen. Geeignete anionische Dispergiermittel sind insbesondere Salze von Alkylbenzolsulfonsäuren, beispielsweise Calzium-Dodecylbenzolsulfonat, ferner Salze von Mono- und Di-phenolpolyglykolether-phosphaten, sowie Salze von Mono-phenolpolyglykolether-sulfaten zu nennen. Geeignete Gemische von anionischen und nichtionischen Dispergiermitteln sind insbesondere Gemische aus Alkylphenolpolyglykolethern und Salze von Mono- und Di-phenolpolyglykolether-phosphaten.

Unter wasserlöslichen Verpackungsmaterialien sind im Zusammenhang mit vorliegender Erfindung vor allem Folien aus wasserlöslichen Polymeren, zum Beispiel Folien aus Polyvinylalkohol, Polyvinylpyrrolidon, Copolymeren von Vinylalkohol und Vinylpyrrolidon, Copolymeren von Vinylalkohol und Vinylacetat, sowie Folien auf Cellulose-Basis, zum Beispiel Folien aus Carboxymethylcellulose, zu verstehen. Bevorzugt als Verpackungsmaterial sind Folien aus Polyvinylalkohol.

Die erfindungsgemässen Wirkstoffkonzentrate können grundsätzlich beliebige agrochemische Wirkstoffe, beispielsweise Insektizide, Akarizide, Fungizide, Herbizide und den Pflanzenwuchs regulierende Wirksubstanzen enthalten.

Die erfindungsgemässen Wirkstoffkonzentrate können in der Weise hergestellt werden, dass man eine oder mehrere Aktivsubstanzen in einer Lösung des Dispergiermittels in einem nichtwässrigen Lösungsmittel löst bzw. suspendiert und dann den viskositätssteigernden Zusatz in die erhaltene Mischung einarbeitet. Die Herstellung der Konzentrate kann in üblichen Mischapparaturen erfolgen. Wenn die einzelnen Komponenten der Mischung wasserlöslich sind, kann der Zusatz von Dispergiermittel unterbleiben, denn in diesem Fall entsteht aus dem Konzentrat beim Verdünnen mit Wasser unmittelbar eine wässrige Lösung. Ist dagegen eine oder mehrere Komponenten des Konzentrats nicht in Wasser löslich, so werden vorteilhaft ein oder mehrere Dispergiermlttel zugesetzt, um beim Verdünnen des Konzentrats die rasche und gleichmässige Dispersion der Bestandteile in Wasser zu gewährleisten. Das Konzentrat kann dann unmittelbar in gleichen Portionen in Beutel abgefüllt werden, wobei diese Beutel in bekannter Weise aus Folien hergestellt werden können, die aus den vorgenannten Polymeren bestehen. Nach Einfüllung des Konzentrats werden die Beutel versiegelt. Man erhält auf diese Weise Verpackungen, die pro Verpackungseinheit eine definierte Menge Wirkstoff enthalten. Die einzelnen Beutel können dann für Transport und Lagerung einzeln oder mehrere zusammen in Container, beispielsweise Container aus Karton, Polyethylen, Polypropylen oder Polyvinylchlorid, verpackt werden, aus denen sie unmittelbar vor der Anwendung leicht entnommen werden können.

Zur Herstellung der erfindungsgemässen Verpackungen geht man vorteilhaft so vor, dass man eine Folienbahn aus wasserlöslichem Material mit einer Breite von 100-300 mm und einer Dicke von 30-40 »m kontinuierlich einer Abfüllmaschine zuführt, in der die Folienbahn zunächst mit einer Längsnaht zu einem Schlauch verschweisst wird, der an seinem Ende durch eine Querschweissnaht verschlossen wird. Der so vorgeformte Beutel wird dann nach dem Einfüllen der gewünschten Menge an Wirkstoffkonzentrat durch eine Trennschweissnaht verschlossen, sodass einerseits ein gebrauchsfertiger, das Wirkstoffkonzentrat enthaltender Beutel und andererseits ein neuer, aus dem Folienschlauch vorgeformter Beutel erhalten wird, in den die nächste Portion Wirkstoffkonzentrat eingefüllt werden kann. Die Herstellung der Schweissnähte kann thermisch bei einer Temperatur von etwa 300°C, sowie durch Impuls-Schweissung oder durch Hochfrequenz-Schweissung erfolgen.

Die Handhabung und die Anwendung der erfindungsgemässen Pestizidkonzentrate ist ausserordentlich einfach. Es werden jeweils ein oder mehrere Beutel aus dem Container entnommen und in einen mit Wasser gefüllten Spraytank gegeben, wo sich der aus dem wasserlöslichen Verpackungsmaterial bestehende Beutel in wenigen Minuten auflöst und sich das Konzentrat unter Bildung einer Spritzbrühe im Wasser verteilt. Dabei werden nicht nur die im Zusammenhang mit wasserlöslichen Verpackungen bereits bekannten Vorteile, nämlich Vermeidung des direkten Kontakts des Anwenders mit dem Konzentrat, leichte Dosierbarkeit der Wirkstoffe ohne Verwendung von Messgefässen und Vermeidung der Kontamination von Verpackungsbehältern, erreicht, sondern es wird darüberhinaus die mechanische Stabilität der Verpackungen insbesondere die Stabilität gegen plötzliche mechanische Beanspruchung, gegenüber bisher bekannten, flüssige Pestizidkonzentrate enthaltende Beutel dieser Art wesentlich erhöht. Erst durch diese Erhöhung der Stabilität gegenüber plötzlich auftretenden mechanischen Beanspruchungen wird es möglich, die aus der Verwendung von wasserlöslichem Verpackungsmaterial resultierenden Vorteile voll auszunutzen.

Die nachfolgenden Beispiele dienen zur weiteren Erläuterung der vorliegenden Erfindung. Es werden einige typische Zusammensetzungen von erfindungsgemässen Pestizid-Konzentraten angegeben, die die vorliegende Erfindung in keiner Weise beschränken sollen. Alle Prozentangaben sind Gewichtsprozente. Ferner wird die Herstellung der erfindungsgemässen Verpackungen beschrieben.

Beispiel 1

| | |
|---|---|
| Propiconazol techn. | 62,5 % |
| Dodecylbenzolsulfonsäure-Ca-Salz | 4,5 % |
| Ricinusölpolyglykolether (EO 36) | 4,0 % |
| Isooctlyphenolpolyglykolether (EO 8) | 2,0 % |
| Alkylbenzol C10-C13 | ad 100 % |
| Viskosität: 11000 cp | |

Beispiel 2

| | |
|---|---|
| Propiconazol techn. | 65,0 % |
| PO-EO-Blockpolymer (80 % EO; M̅G̅: 8550) | 4,5 % |
| Ricinusölpolyglykolether (EO 36) | 8,8 % |
| Natriumdiamylsulfosuccinat | 4,6 % |
| n-Butanol | ad 100 % |
| Viskosität: 5000 cp | |

Beispiel 3

| | |
|---|---|
| Propiconazol techn. | 62,5 % |
| Dodecylbenzolsulfonsäure-Ca-Salz | 3,0 % |
| Isotridecylalkoholpolyglykolether (EO 6) | 3,0 % |
| EO-PO-Blockpolymer (20 % EO; M̅G̅: 5000) | 4,0 % |
| Silikonöl | 0,2 % |
| Hydroxypropylcellulose | 1,0 % |
| Cyclohexanon | ad 100 % |
| Viskosität: 2000 cp | |

Beispiel 4

| | |
|---|---|
| Propiconazol techn. | 62,5 % |
| Dodecylbenzolsulfonsäure-Ca-Salz | 3,0 % |
| Isotridecylalkoholpolyglykolether (EO 6) | 3,0 % |
| EO-PO-Blockpolymer (20% EO; M̅G̅: 5000) | 4,0 % |
| Silikonöl | 0,2 % |
| Hydroxypropylcellulose | 1.0 % |
| Dipropylenglykolmonomethylether | ad 100 % |
| Viskosität: 2000 cp | |

Beispiel 5

| | |
|---|---|
| Propiconazol techn. | 62,5 % |
| Tristyrylphenolpolyglykolether (EO 20) | 8,0 % |
| Nonylphenolpolyglykolether (EO 8) | 8,0 % |
| Nonylphenolpolyglykolether | |
| (EO 8-10)-phosphat | 2.0 % |
| Silikonöl | 0,2 % |
| Hydroxypropylcellulose | 0,72 % |
| Cyclohexanon | ad 100 % |
| Viskosität: 2400 cp | |

Beispiel 6

| | |
|---|---|
| Penconazol techn. | 25,0 % |
| Propylenglykol | 7,0 % |
| Isotridecylalkoholpolyglykolether (EO 6) | 3,0 % |
| Dodecylbenzolsulfonsäure-Ca-Salz | 4,0 % |
| EO-PO-Blockpolymer (20% EO; M̅G̅: 5000) | 10,0 % |
| Silikonöl | 0,05 % |
| Hydrophile Kieselsäure | 3,5 % |
| Ricinusöl | ad 100 % |
| Viskosität: 5000 cp | |

Beispiel 7

| | |
|---|---|
| Phosphamidon techn. | 65,6 % |
| Dodecylbenzolsulfonsäure-Ca-Salz | 1,6 % |
| Poly-Glycerinphthalat | 1,6 % |
| Oleylalkoholpolyglykolether (10 EO) | 3,0 % |
| Silikonöl | 0,08 % |
| Hydroxypropylcellulose | 0,82 % |
| Dipropylenglykolmonomethylester | ad 100 % |
| Viskosität: 3000 cp | |

Beispiel 8

| | |
|---|---|
| Monocrotophos techn. | 60,6 % |
| Hydroxypropylcellulose | 4,0 % |
| Dipropylenglykomethylether | ad 100 % |
| Viskosität: 3000 cp | |

Beispiel 9

| | |
|---|---|
| 2-[4-(5-Chlor-5-fluorpyrid-2-yloxy)-phenoxy]-propionsäurepropargylester | 24,0 % |
| 5-Chlor-8-(1-methylhexyloxycarbonylmethoxy)-chinolin | 6,0 % |
| N-Methylpyrrolidon | 5,0 % |
| Dodecylbenzoesäure-Ca-Salz: | 7,0 % |
| Nonylphenolpolypropylen(13)polyethylen(20)-glykol | 13,0 % |
| hydrophile Kieselsäure | 2,1 % |
| Ethylcellulose | 2,1 % |
| Anisol ad | 100 % |
| Viskosität: 2000 cp | |

Beispiel 10: Eine Folienbahn aus Polyvinylalkohol (Hersteller: Syntana Handelsgesellschaft GmbH, Mülheim-Ruhr, BRD) von 200 mm Breite und einer Dicke von 35 »m wird kontinuierlich einer Abfüllmaschine (Hersteller: NEDI S.A., Saint-Mammes, France) zugeführt, in der sie durch Impuls-Schweissung mit einer Längsnaht zu einem Schlauch verschweisst wird, der an seinem Ende mit einer Querschweissnaht verschlossen wird. Der auf diese Weise vorgeformte Beutel wird dann jeweils nach Einfüllen von 100 g Wirkstoffkonzentrat gemäss Beispiel 3 durch eine Trennschweissnaht so abgetrennt, dass verschlossene Beutel von 135 mm Länge entstehen, die das Wirkstoflkonzentrat enthalten.

Die so hergestellten Verpackungen lösen sich in 25-200 l Wasser von 15-20°C in etwa 1 Minute auf und ergeben eine gebrauchsfertige Spritzbrühe.

## Patentansprüche

1. Pestizide Wirkstoffkonzentrate in abgepackter Form, welche aus einer wasserlöslichen Verpackung und einem flüssigen, nichtwässrigen Pestizidkonzentrat bestehen, dadurch gekennzeichnet, dass es eine oder mehrere wasserunlösliche Aktivsubstanzen, ein gegenüber dem wasserlöslichen Verpackungsmaterial inertes Lösungsmittel, einen viskositätssteigernden Zusatz und ein oder mehrere Dispergiermittel enthält und die Viskosität des flüssigen Pestizidkonzentrats 1000-20000 cp beträgt,

2. Pestizide Wirkstoffkonzentrate nach Anspruch 1, dadurch gekennzeichnet, dass sie als Aktivsubstanz ein oder mehrere Insektizide, Akarizide, Fungizide, Herbizide oder den Pflanzenwuchs regulierende Substanzen enthalten.

3. Pestizide Wirkstoffkonzentrate nach Anspruch 1, dadurch gekennzeichnet, dass sie als Lösungsmittel Alkohole, Alkandiole (Glykole), Diethylenglykolmonoether, Ketone, Ester, aliphatische und aromatische Kohlenwasserstoffe oder mineralische oder pflanzliche Oele enthalten.

4. Pestizide Wirkstoffkonzentrate nach Anspruch 3, dadurch gekennzeichnet, dass sie als Lösungsmittel Cyclohexanol, Diacetonalkohol, Cyclohexanon, Butyrolacton, Amylacetat, Toluol, Xylol, oder Gemische von Alkylbenzolen mit Siedebereich von 130-170°C enthalten.

5. Pestizide Wirkstoffkonzentrate nach Anspruch 1, dadurch gekennzeichnet, dass sie als viskositätssteigernden Zusatz ein wasserlösliches Polymeres oder hydrophile Kieselsäure enthalten.

6. Pestizide Wirkstoffkonzentrate nach Anspruch 5, dadurch gekennzeichnet, dass sie als viskositätssteigernden Zusatz Cellulosederivate, Proteine (Gelatine) oder Polyvinylpyrrolidon mit einem Molgewicht von 600000-1000000 enthalten.

7. Pestizide Wirkstoffkonzentrate nach Anspruch 6, dadurch gekennzeichnet, dass sie als viskositätssteigernden Zusatz Methylcellulose, Ethylcellulose, Hydroxyethylcellulose oder Hydroxypropylcellulose enthalten.

8. Pestizide Wirkstoffkonzentrate nach Anspruch 1, dadurch gekennzeichnet, dass das Verpackungsmaterial aus einer Folie aus einem wasserlösliche Polymeren besteht.

9. Pestizide Wirkstoffkonzentrate nach Anspruch 8, dadurch gekennzeichnet, dass das wasserlösliche Verpackungsmaterial eine Folie aus Polyvinylalkohol, Polyvinylpyrrolidon, einem Copolymeren von Vinylalkohol und Vinylpyrrolidon, einem Copolymeren von Vinylalkohol und Vinylacetat oder einer Folie auf Zellulosebasis ist.

10. Pestizide Wirkstoffkonzentrate nach Anspruch 8, dadurch gekennzeichnet, dass das Verpackungsmaterial eine Folie aus Polyvinylalkohol ist.

## Claims

1. A pesticide concentrate in packaged form comprising a water-soluble package and a liquid, non-aqueous pesticide concentrate, wherein the concentrate comprises one or more water-insoluble active ingredients, a solvent that is inert towards the water-soluble packaging material, a viscosity-increasing additive and one or more dispersants, and wherein the viscosity of the liquid pesticide concentrate is 1000-20 000 cp.

2. A pesticide concentrate according to claim 1, which comprises as active ingredient(s) one or more insecticides, acaricides, fungicides, herbicides or plant-growth-regulating substances.

3. A pesticide concentrate according to claim 1, which comprises as solvent an alcohol, alkanediol (glycol), diethylene glycol monoether, ketone, ester, aliphatic or aromatic hydrocarbon or mineral or vegetable oil.

4. A pesticide concentrate according to claim 3, which comprises as solvent cyclohexanol, diacetone alcohol, cyclohexanone, butyrolactone, amyl acetate, toluene, xylene or a mixture of alkylbenzenes having a boiling range of 130-170°C.

5. A pesticide concentrate according to claim 1, which comprises a water-soluble polymer or hydrophilic silicic acid as viscosity-increasing additive.

6. A pesticide concentrate according to claim 5, which comprises as viscosity-increasing additive a cellulose derivative, a protein (gelatin) or polyvinylpyrrolidone having a molecular weight of 600 000-1000 000.

7. A pesticide concentrate according to claim 6, which comprises as viscosity-increasing additive methyl cellulose, ethyl cellulose, hydroxyethyl cellulose or hydroxypropyl cellulose.

8. A pesticide concentrate according to claim 1, wherein the packaging material consists of a film made from a water-soluble polymer.

9. A pesticide concentrate according to claim 8, wherein the water-soluble packaging material is a film made from polyvinyl alcohol, polyvinylpyrrolidone, a copolymer of vinyl alcohol and vinylpyrrolidone, a copolymer of vinyl alcohol and vinyl acetate, or is a cellulosic film.

10. A pesticide concentrate according to claim 8, wherein the packaging material is a film made from polyvinyl alcohol.

## Revendications

1. Concentrés de matières actives pesticides sous une forme empaquetée, constitués d'un emballage soluble dans l'eau et d'un concentré de pesticides liquide non aqueux, caractérisés en ce qu'ils contiennent une ou plusieurs matière(s) active(s) insoluble(s) dans l'eau, un solvant inerte vis-à-vis du matériau d'emballage soluble dans l'eau, un additif augmentant la viscosité et un ou plusieurs agent(s) dispersant(s) et en ce que la viscosité du concentré de pesticides liquide est comprise entre 1.000 et 20.000 cp.

2. Concentrés de matières actives pesticides selon la revendication 1, caractérisés en ce qu'ils contiennent, comme matière active, un ou plusieurs insecticide(s), acaricide(s), fongicide(s), herbicide(s) ou des substances régulant la croissance des plantes.

3. Concentrés de matières actives pesticides selon la revendication 1, caractérisés en ce qu'ils contiennent, comme solvants, des alcools, des alcanediols (glycols), des diéthylèneglycolmonoéthers, des cétones, des esters, des hydrocarbures aliphatiques et aromatiques ou des huiles minérales ou végétales.

4. Concentrés de matières actives pesticides selon la revendication 3, caractérisés en ce qu'ils contiennent, comme solvants, du cyclohexanol, du diacétone-alcool, de la cyclohexanone, de la butyrolactone, de l'acétate d'amyle, du toluène, du xylène ou des mélanges d'alkylbenzènes présentant un intervalle d'ébullition allant de 130 à 170°C.

5. Concentrés de matières actives pesticides selon la revendication 1, caractérisés en ce qu'ils contiennent, comme additif augmentant la viscosité, un polymère soluble dans l'eau ou de l'acide silicique hydrophile.

6. Concentrés de matières actives pesticides selon la revendication 5, caractérisés en ce qu'ils contiennent, comme additif augmentant la viscosité, des dérivés de la cellulose, des protéines (gélatine) ou de la polyvinylpyrrolidone ayant un poids moléculaire compris entre 600.000 et 1.000.000.

7. Concentrés de matières actives pesticides selon la revendication 6, caractérisés en ce qu'ils contiennent, comme additif augmentant la viscosité, de la méthylcellulose, de l'éthylcellulose, de l'hydroxyéthylcellulose ou de l'hydroxypropylcellulose.

8. Concentrés de matières actives pesticides selon la revendication 1, caractérisés en ce que le matériau d'emballage est constitué d'une feuille réalisée en un polymère soluble dans l'eau.

9. Concentrés de matières actives pesticides selon la revendication 8, caractérisés en ce que le matériau d'emballage soluble dans l'eau est une feuille constituée d'alcool polyvinylique, de polyvinylpyrrolidone, d'un copolymère d'alcool vinylique et de vinylpyrrolidone, d'un copolymère d'alcool vinylique et d'acétate de vinyle ou d'une feuille à base de cellulose.

10. Concentrés de matières actives pesticides selon la revendication 8, caractérisés en ce que le matériau d'emballage est une feuille réalisée en alcool polyvinylique.
